Europäisches Patentamt

European Patent Office

Office européen des brevets

(11) Veröffentlichungsnummer: **0 167 040**
**B1**

(12) **EUROPÄISCHE PATENTSCHRIFT**

(45) Veröffentlichungstag der Patentschrift:
**20.04.88**

(21) Anmeldenummer: **85107353.6**

(22) Anmeldetag: **14.06.85**

(51) Int. Cl.⁴: **B 01 D 8/00**

(54) **Verfahren und Vorrichtung zur Abtrennung einer Gaskomponente aus einem Gasgemisch durch Ausfrieren.**

(30) Priorität: **16.06.84 DE 3422417**

(43) Veröffentlichungstag der Anmeldung:
**08.01.86 Patentblatt 86/2**

(45) Bekanntmachung des Hinweises auf die Patenterteilung:
**20.04.88 Patentblatt 88/16**

(84) Benannte Vertragsstaaten:
**CH DE FR GB LI**

(56) Entgegenhaltungen:
**DE - B - 2 442 164**
**DE - C - 415 524**
**FR - A - 1 393 277**
**GB - A - 936 689**
**US - A - 2 617 758**
**US - A - 2 944 966**

(73) Patentinhaber: **Kernforschungsanlage Jülich**
**Gesellschaft mit beschränkter Haftung, Postfach 1913,**
**D-5170 Jülich 1 (DE)**

(72) Erfinder: **Chatzipetros, Johann, Talstrasse 6,**
**D-5020 Frechen-Königsdorf (DE)**
Erfinder: **Hackfort, Helmut, Dr., Goethestrasse 29,**
**D-5000 Köln 40 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung bezieht sich auf ein Verfahren und eine Vorrichtung zur Abtrennung einer Gaskomponente aus einem Gasgemisch durch Ausfrieren in einer Kühlfalle an in Gegenstromkühlung gekühlten, im wesentlichen senkrecht zur allgemeinen Gasströmungsrichtung verlaufenden Kondensationsflächen, an denen das Gas unter jeweiliger Richtungsänderung entlanggeführt wird.

Die Abtrennung von Gaskomponenten aus einer Gasmischung durch Ausfrieren ist grundsätzlich bekannt. Insbesondere für das Ausfrieren von Xenon aus Stickstoff wurden bereits Kühlfallen für die kryogene Abtrennung entwickelt, bei denen die Gasmischung durch ring- oder rohrförmige gekühlte Leitungen geschickt wird, die bisweilen auch in Längsrichtung Rippen aufweisen und in denen ein Ausfrieren durch Reif- oder Schneebildung des Xenons bei entsprechend niedrigen Temperaturen stattfindet, die dia Sättigungstemperatur des in der Gasmischung enthaltenen Xenons unterschreiten.

Solche Kühlfallen neigen im allgemeinen über kurz oder lang zum Verstopfen und haben schwankende Abscheidungsgrade, d.h. ihre Arbeitsweise erscheint nicht optimal. Insbesondere kann bei Festlegung gewünschter Restkonzentrationen keinesfalls sichergestellt werden, dass diese auch tatsächlich erreicht werden.

Seit längerer Zeit bekannt (US-A-2 999 365) sind Kühlfallen — insbesondere zur Abtrennung von Wasserdampf oder Kohlendioxid aus Luft —, bei denen quer zur allgemeinen Gasströmungsrichtung angeordnete ringförmige Kühlbleche mit von Blech zu Blech versetzten Durchbrüchen versehen sind, so dass das Gas längs der Kühlstrecke eine «Taumelbewegung» ausführen muss. Die gut wärmeleitenden Bleche stehen über einen gut wärmeleitenden (Stütz)-träger mit der am Gasauslassende der Falle befindlichen Kältequelle in Verbindung, wodurch der Temperaturunterschied zwischen den Blechen gering gehalten wird (unter 10 bis 20 °C), wobei das Blech, an dem sich der kondensierbare bzw. ausfrierbare Anteil des Gases abscheidet (bzw. abzuscheiden beginnt), 10 bis 20 °C kälter ist als die Abscheidungstemperatur der abzutrennenden Komponente. Für die Abtrennung von Wasserdampf aus Luft wird die Temperatur des Blechs, an dem die Abscheidung stattfindet, zwischen —10 °C und —20 °C gewählt.

Für eine befriedigende Arbeitsweise der Kühlfalle sollen die durch die Durchbrüche durchgesetzte Gasmenge und ihre Geschwindigkeit nicht zu gering sein. Zu diesem Zweck wird der Öffnungsquerschnitt der Durchbrüche so gewählt, dass eine mittlere Gasgeschwindigkeit in der Öffnung von $\geq 5$ cm/s vorliegt. Als obere Grenze werden 500 cm/s genannt.

Dieser Vorschlag hat ersichtlich keinen Eingang in die Praxis gefunden, insbesondere nicht für die Trennung von Gasgemischen im Hinblick auf die möglichst weitgehende Absonderung einer oder auch mehrerer abzusondernder Gaskomponenten (siehe z.B. T. Mitani u.a. in J. Chem. Engng. Japan 14 (1981) 105 ff; A.A. Gevorkyan u.a. in Khim. Neft. Mashinostroenie 1 (1981) 18 f. und R.S. Eby, Bericht-Nr. K-1896 (UC-79 c) von Aug. 1978 des Inst. System- u. Ausrüstungstechnol., Oak Ridge, Tennessee S. 45).

Ziel der Erfindung ist daher ein Verfahren und eine Vorrichtung, die störungsfrei über lange Zeiten hinweg arbeiten und eine verlässliche Abtrennung der auszufrierenden Komponente auf gleichbleibende Restgehalte ergeben.

Das zu diesem Zweck entwickelte erfindungsgemässe Verfahren ist dadurch gekennzeichnet, dass man die Temperatur der Kühlflächen durch Kältemittelzufuhr und Heizung derart regelt, dass am Gaseingang die Sättigungstemperatur der auszufrierenden Komponente in der zuströmenden Gasmischung herrscht, während am Gasausgang die der gewünschten Restkonzentration der auszufrierenden Komponente entsprechende Sättigungstemperatur und dazwischen eine im wesentlichen lineare Temperaturverteilung vorliegt, wobei durch angemessen lange Verweilzeiten und Umwälzung des Gases innerhalb der Ausfrierstrecke dafür gesorgt wird, dass die Gastemperatur im wesentlichen der Kühlflächentemperatur folgt und der Strömungsquerschnitt der Ausfrierstrecke keine zu einem Zusetzen Anlass gebenden Verengungen aufweist.

Bei diesem Verfahren wird die Temperatur der Kühlstrecke durch entsprechende Kältemittelzufuhr und Heizung abhängig vom Partialdruck der abzutrennenden Komponente geregelt und für einen intensiven Temperaturausgleich zwischen Kühlfläche und Gasraum und einen forcierten Transport der auszufrierenden Komponente zu den Kühlflächen über die gesamte Kühlstrecke hinweg gesorgt. Auf diese Weise wird eine ausreichende Gleichgewichtseinstellung zwischen Gas und Kühlfläche erreicht, so dass in der Tat der Restgehalt des Gases an auszufrierendem Material nach Verlassen der Kühlfalle dem Partialdruck der auszufrierenden Komponente bei der Gasausgangstemperatur der Kühlfalle entspricht.

Üblicherweise werden (aus dem Durchsatz errechnete) mittlere Strömungsgeschwindigkeiten gewählt, die 1,2 m/s nicht übersteigen und vorzugsweise bei etwa 0,12 m/s liegen.

Die Anordnung der Kühlflächen verhindert, dass in der Ausfrierstrecke eine hydro- und thermodynamisch ausgebildete laminare Strömung auftreten kann. (Bei laminarer Strömungsform würde ein Gas-Dampf-Gemisch mit einem LEWIS'schen Koeffizienten $\varepsilon$ — das ist das Verhältnis von Temperaturleitzahl zur Diffusionszahl — grösser als 1 die Ausfrierstrecke $\varepsilon$-fach übersättigt verlassen.

Die dem Gas für den intensiven Wärmeaustausch zur Verfügung gestellte Kühlfläche soll dabei vorzugsweise etwa 50 bis 100 mal grösser sein als die über den erforderlichen Wärmetransport errechnete Minimalfläche zum Ausfrieren der zu entfernenden Komponente.

Dabei wird die Umwälzung des Gases im wesentlichen durch versetzte Anordnung der Kühlbleche und Umlenkung des Gases und ggf. Beschleunigung und Verlangsamung durch Querschnittsverminderung am Umlenkort erreicht, wobei jedoch solche Verengungen der Ausfrierstrecke in jeder Weise vermieden werden, die Anlass zu Verstopfungen geben könnten. Die Bleche können durch Ringbleche mit unterschiedlichem Durchmesser oder alternierend abgeschnittene Ringbleche gebildet werden oder auch durch exzentrische Anordnungen.

Eine zur Durchführung des erfindungsgemässen Verfahrens geeignete Kühlfalle mit einer Serie von quer zur allgemeinen Gasströmungsrichtung angeordneten Kühlblechen guter Wärmeleitfähigkeit, die zumindest teilweise mit einer gekühlten Wand in Verbindung stehen und durch schikanenförmige Anordnung einen allgemein meanderförmigen Kühlkanal mit Umkehr- und ggf. Beschleunigungspunkten bilden, ist im wesentlichen gekennzeichnet durch eine Regelung der Temperatur der Kühlbleche durch die Kühlmittelzufuhr und zusätzliche elektrische Heizmittel mit Hilfe von über die Ausfrierstrecke verteilten Temperaturfühlern an einzelnen Kühlblechen.

Bei dieser Kühlfalle werden die oben genannten Sättigungstemperaturen am Gaseingang und -ausgang eingehalten und dazwischen wird für eine etwa lineare (oder leicht parabelförmige) Temperaturverteilung über die Kühlstrecke hinweg gesorgt.

Die Kältezufuhr zu den gut wärmeleitenden Kühlflächen, die z.B. aus Kupfer bestehen, erfolgt über damit verlötete oder kontaktierte kältemitteldurchströmte (Kupfer-) Rohre, die wiederkehrend durch schlecht wärmeleitende Rohrstrecken (z.B. aus Edelstahl) unterbrochen werden, wodurch die Ausfrierstrecke in mehrere hintereinandergeschaltete Kühlabschnitte unterteilt wird. Die Kupferrohre haben insbesondere einen quadratischen Querschnitt und sind an- bzw. aufeinander gelötet. Auf die Rohrwandung sind für jeden Abschnitt gesondert Heizleiterwicklungen aufgelötet. Die Temperatur der Kühlflächen wird bei jedem Abschnitt überwacht und der gestellten Forderung gemäss durch Wärmezufuhr über die getrennt versorgten Heizleiter bzw. Zufuhr von Kältemittel geregelt.

Besonders zweckmässig erscheint konstruktiv eine konzentrisch gebaute Kühlfalle mit einer axialen Vorkühlstufe ohne Feinregelung, die von einer Ausfrierstrecke mit Temperaturregelung wie vorstehend beschrieben umschlossen wird.

Weitere Besonderheiten gehen aus den Patentansprüchen und der nachfolgenden Beschreibung eines Ausführungsbeispiels unter Bezugnahme auf die angefügte Zeichnung hervor.

Diese zeigt eine Kühlfalle 1 in konzentrischer Bauweise mit einer Vorkühlstufe 2 und einer Ausfrierstrecke 3. Beide werden von einer abgasgekühlten Strahlungsabschirmung 4 umschlossen.

Die Vorkühlstufe 2 wird im wesentlichen durch kreisringförmige Bleche mit einem Vertikalabstand von 25 mm gebildet. Von diesen ringförmigen Blechen sind jeweils aussen alternierend Kreisabschnitte entfernt, so dass zur Wand hin Lücken (im Scheitelpunkt 25 mm) entstehen, über die das bei 5 zutretende Gas, dessen Weg in der Apparatur durch Pfeile angedeutet ist, von einem Zwischenraum zum nächsten strömt.

In der Ausfrierstrecke 3 sind zwischen den gekühlten Ringblechen 6 (die nicht den gesamten Querschnitt ausfüllen und deren Abstand auf 50 mm verdoppelt ist) selbst nicht gekühlte, ebenfalls kreisförmige Umlenkbleche 6' angeordnet.

Der Kühlmittelstrom ist durch Punktierung angedeutet, und zwar tritt jeweils (d.h. bei der Vorkühlstufe und Ausfrierstrecke) das frisch zugeführte (kälteste) Kühlmittel am Gasausgangsende der Vorkühlstufe bzw. Ausfrierstrecke zu. Es ergibt sich somit eine Gegenstromkühlung.

Die Temperatur $T$ der Kühlflächen 6 wird kontinuierlich überwacht und der durch miteinander verlötete Kupferleitungen 7 und VA-Stahlzwischenstücke 7' fliessende Kühlmittelstrom so geregelt, dass am Gaseingang bzw. -ausgang der Ausfrierstrecke jeweils die Sättigungstemperatur der auszufrierenden Komponente im zuströmenden Gas bzw. die ihrer gewünschten Restkonzentration entsprechende Sättigungstemperatur herrscht. Zusätzlich zu der Kältezufuhr über das Kühlmittel sind Heizleiterwicklungen $H$ vorgesehen, die der gewünschten Temperaturkontrolle dienen und die Einstellung der jeweiligen Sättigungswerte wie angegeben und eine etwa lineare Temperaturverteilung innerhalb der Ausfrierstrecke ermöglichen. Das Gas gelangt aus der Vorkühlstufe 2 in die Ausfrierstrecke 3 über eine Rohrverbindung 8 mit einem über den Boden der Vorkühlstufe herausragenden Stutzen 9. Innerhalb der Vorkühlstufe evtl. gebildete Ausscheidungen können sich dadurch bevorzugt am Boden der Vorkühlstufe sammeln. Für eine solche Sammlung dienen auch schalenartig ausgebildete Kühlflächen 10 am Gasausgang der Vorkühlstufe.

Die beschriebene Kühlfalle wurde zum Ausfrieren von Xenon aus Stickstoff von 1 bar Gesamtdruck verwendet, dessen Anfangs-Xe-Konzentration abgestuft zwischen 1 und 2 Vol.% lag. In der Vorkühlstufe erfolgte eine Abkühlung der Gasmischung auf etwa 120 K, während in der Ausfrierstrecke am Gaseingang die jeweilige Sättigungstemperatur des Xenons und am Ausgang eine Temperatur im Bereich zwischen 110 K und 78 K (je nach gewünschter Restkonzentration) mit nahezu linearem Abfall über die Ausfrierstrecke hinweg vorgesehen wurde. Auf diese Weise wurde die Restkonzentration des Xenons um 2 bis 3 Grössenordnungen herabgesetzt und eine Reinheit des Stickstoffträgergases von 99.998% erreicht.

Umfangreiche Untersuchungen haben ergeben, dass die Reinigungswirkung der Ausfrierstrecke sicher vorhergesagt werden kann: Der Restgehalt des abströmenden Gases entspricht jeweils genau dem Sättigungsdruck bei der eingestellten Kühlflächentemperatur am Gasausgang. Dieses Ergebnis ist hervorzuheben, da sich in gekühlten Rohrstrecken oder in einer Ausfrierfalle mit parallel zur Strömungsrichtung angeordneten Kühlflächen bei niedrigen Strömungsgeschwindigkeiten eine laminare Strömung ausbilden würde, bei der die Xe-Komponente die Ausfrierstrecke 2,2fach übersättigt verlassen würde (s.o.).

Experimente mit einem Gemisch aus 91 Vol% Xenon und 9 Vol% Argon haben gezeigt, dass auch das Trägergas Xenon bis auf einen Rest von etwa 20 vpm ausgefroren und in reiner Form gewonnen werden kann. Die gemessenen Ar-Verunreingungen im festen Xenon lagen bei nur etwa 20 vpm.

Die technische Prozesskontrolle beschränkt sich allein auf die Temperaturkontrolle der Kühlflächen.

Man kann die Ausfrierleistung noch verbessern, indem man die Oberfläche der Kühlbleche durch Grobsandstrahlen aufrauht oder durch Aufbringen von oberflächenvergrössernden Elementen (z.B. Füllkörpern) verändert.

So kann insbesondere auf den ausgangsnahen Kühlflächen eine Belegung mit z.B. Zeolith-Granulat — beispielsweise in Form einer Schüttung auf Ausfrierflächen mit umgebördelten Rändern — vorgesehen werden.

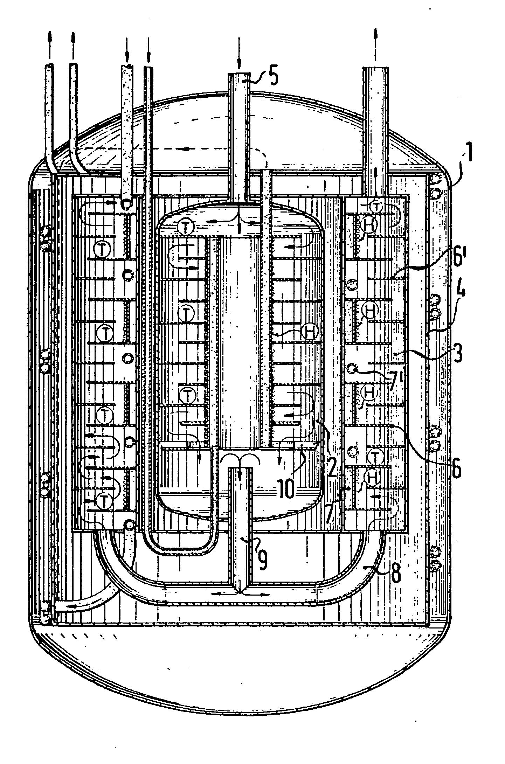

## Patentansprüche

1. Verfahren zur Abtrennung einer Gaskomponente aus einem Gasgemisch durch Ausfrieren in einer Kühlfalle an in Gegenstromkühlung gekühlten, im wesentlichen senkrecht zur allgemeinen Gasströmungsrichtung verlaufenden Kondensationsflächen, an denen das Gas unter jeweiliger Richtungsänderung entlanggeführt wird, dadurch gekennzeichnet, dass man die Temperatur der Kühlflächen durch Kältemittelzufuhr und Heizung derart regelt, dass am Gaseingang die Sättigungstemperatur der auszufrierenden Komponente in der zuströmenden Gasmischung herrscht, während am Gasausgang die der gewünschten Restkonzentration der auszufrierenden Komponente entsprechende Sättigungstemperatur und dazwischen eine im wesentlichen lineare Temperaturverteilung vorliegt, wobei durch angemessen lange Verweilzeiten und Umwälzung des Gases innerhalb der Ausfrierstrecke dafür gesorgt wird, dass die Gastemperatur im wesentlichen der Kühlflächentemperatur folgt und der Strömungsquerschnitt der Ausfrierstrecke keine zu einem Zusetzen Anlass gebenden Verengungen aufweist.

2. Verfahren nach Anspruch 1, dadurch gekennzeichnet, dass man das Gas mit einer Strömungsgeschwindigkeit von maximal 1,2 m/s durch einen im wesentlichen von Kühlblechen mit einem Abstand von etwa 20 bis 30 mm gebildeten Kühlkanal schickt, deren Kühlfläche beim etwa 50- bis 100 fachen der für den erforderlichen Wärmetransport errechneten Minimalfläche liegt.

3. Verfahren nach Anspruch 1 oder 2, dadurch gekennzeichnet, dass zusätzlich zur Richtungsänderung von Blech zu Blech eine Beschleunigung und Verlangsamung durch Querschnittsverminderung am Umlenkort vorgesehen wird.

4. Kühlfalle zum Abtrennen einer Gaskomponente aus einem Gasgemisch nach Anspruch 1 mit einer Serie von quer zur allgemeinen Gasströmungsrichtung angeordneten Kühlblechen guter Wärmeleitfähigkeit, die zumindest teilweise mit einer gekühlten Wand in Verbindung stehen und durch schikanenförmige Anordnung einen allgemein meanderförmigen Kühlkanal mit Umkehr- und ggf. Beschleunigungspunkten bilden, gekennzeichnet durch eine Regelung der Temperatur (T) der Kühlbleche durch die Kühlmittelzufuhr und zusätzliche elektrische Heizmittel (H) mit Hilfe von über die Ausfrierstrecke (3) verteilten Temperaturfühlern an einzelnen Kühlblechen (6).

5. Kühlfalle nach Anspruch 4, dadurch gekennzeichnet, dass die Serie von Kühlblechen aktiv gekühlte Kühlbleche (6) und zu diesen versetzt selbst nicht gekühlte Umlenkbleche (6') umfasst.

6. Kühlfalle nach Anspruch 4 oder 5, dadurch gekennzeichnet, dass die Wand im Bereich der Kühlblechanschlüsse im wesentlichen durch Kühlrohre (7) mit guter Wärmeleitfähigkeit gebildet wird und zusätzlich Heizleiter (H) aufweist, dass Zwischenstücke aus Kühlmittelrohren (7') mit geringer Wärmeleitfähigkeit vorgesehen sind, welche die Kühlstrecke in Abschnitte unterteilen und dass die Heizleiter (H) der einzelnen Abschnitte unabhängig voneinander regelbar sind.

7. Kühlfalle nach einem der Ansprüche 4 bis 6, gekennzeichnet durch einen zweistufigen konzentrischen Aufbau mit einer ersten axialen Vorkühstufe (2) zur Abkühlung der Gasmischung bis etwa zur Sättigungstemperatur der auszufrierenden Komponente innerhalb eines axialen Behälters und eine dazu koaxiale Ausfrierstrecke (3) mit abgestufter Temperaturregelung mit Hilfe von Heizleitern (H) und zwischengeschalteten Wärmedämmstufen (7').

8. Kühlfalle nach einem der Ansprüche 4 bis 7, gekennzeichnet durch eine die Kühlfläche vergrössernde Oberflächenbeschaffenheit der Kühlbleche.

9. Kühlfalle nach Anspruch 8, dadurch gekennzeichnet, dass die Kühlflächen zumindest teilweise mit einem Selektiv-Ad/Absorber für die abzutrennende Komponente belegt sind.

10. Kühlfalle nach Anspruch 9, dadurch gekennzeichnet, dass die Kühlbleche vor dem Gasausgang belegt sind.

## Claims

1. Process for separating a gas component from a gas mixture by freezing out in a cold trap on condensation surfaces which are cooled by counter-current cooling and extend substantially perpendicular to the general directon of gas flow and along which the gas is passed with changes of direction each time, characterized in that the temperature of the cooling surfaces is controlled by means of refrigerant supply and heating in such a way that the gas inlet is at the saturation temperature of the component, which is to be frozen out, in the gas mixture flowing in, whereas the gas outlet is at the saturation temperature corresponding to the desired residual concentration of the component which is to be frozen out and the temperature distribution in between is substantially linear, it being ensured by appropriately long residence times and circulation of the gas within the freezing-out path that the gas temperature substantially follows the temperature of the cooling surfaces and the flow cross-section of the freezing-out path does not have any constrictions giving rise to blockages.

2. Process according to Claim 1, characterized in that the gas is passed, at a maximum flow velocity of 1.2 m/s, through a cooling channel which is formed essentially by cooling plates at a distance of about 20 to 30 mm the cooling area of which is about 50 to 100 times the minimum area calculated for the required heat transfer.

3. Process according to Claim 1 or 2, characterized in that, in addition to the change in direction from plate to plate, acceleration and deceleration are provided by a reduction in cross-section at the deflection point.

4. Cold trap for separating a gas component from a gas mixture, according to Claim 1, having a series of cooling plates of good thermal conductivity, which are arranged transversely to the general direction of gas flow and are connected at least partially to a cooled wall and, by means of a baffled arrangement, from a generally meandering cooling channel with deflection points and, if appropriate, acceleration points, characterized by controlling the temperature (T) of the cooling plates by the refrigerant supply and additional electric heating means (H) with the aid of temperature sensors, distributed over the freezing-out path (3), on individual cooling plates (6).

5. Cold trap according to Claim 4, characterized in that the series of cooling plates comprises actively cooled cooling plates (6) and, offset from these, deflection plates (6') which are not themselves cooled.

6. Cold trap according to Claim 4 or 5, characterized in that, in the region of the cooling plate connections, the wall is formed essentially by cooling pipes (7) of good thermal conductivity and additionally has heating conductors (H), that spacers of refrigerant pipes (7') of low thermal conductivity are provided, which subdivide the cooling path into sections, and that the heating conductors (H) of the individual sections are controllable independently of each other.

7. Cold trap according to one of Claims 4 to 6, characterized by a two-stage concentric construction with a first axial pre-cooling stage (2) for cooling the gas mixture down approximately to the saturation temperature of the component, which is to be frozen out, within an axial container and, coaxially thereto, a freezing-out path (3) with a graduated temperature control by means of heating conductors (H) and interposed heat insulation stages (7').

8. Cold trap according to one of Claims 4 to 7, characterized by a surface character of the cooling plates, which enlarges the cooling area.

9. Cold trap according to Claim 8, characterized in that the cooling surfaces are at least partially covered by an adsorbent/absorbent selective for the component which is to be separated off.

10. Cold trap according to Claim 9, characterized in that the cooling plates are covered upstream of the gas outlet.

**Revendications**

1. Procédé pour séparer un constituant gazeux d'un mélange gazeux, par congélation dans un piège cryogénique sur des surfaces de condensation, qui sont refroidies dans un dispositif de refroidissement à contre-courant, qui sont sensiblement perpendiculaires à la direction générale du courant gazeux et le long desquelles le gaz passe avec un changement de direction, caractérisé en ce qu'il consiste à régler la température des surfaces de refroidissement par apport d'agent de refroidissement et par chauffage de manière à faire régner, à l'entrée du gaz, la température de saturation du constituant à séparer par congélation du mélange gazeux affluent, tandis que la sortie du gaz est à la température de saturation correspondant à la concentration résiduelle souhaitée du constituant à séparer par congélation et, entre l'entrée et la sortie, la répartition de température est sensiblement linéaire, en faisant en sorte que, grâce à des durées de séjour proportionnées et une inversion de la circulation du gaz, la température du gaz suive sensiblement la température des surfaces de refroidissement alors que la section transversale d'écoulement de la zone de séparation par congélation ne présente pas d'étranglement donnant lieu à un dépôt.

2. Procédé suivant la revendication 1, caractérisé en ce qu'il consiste à envoyer le gaz à une vitesse d'écoulement de 1,2 m/s au maximum dans un canal de refroidissement formé essentiellement de tôles de refroidissement à une distance de 20 à 30 mm environ, les surfaces de refroidissement du canal représentant de 50 à 100 fois environ la surface minimale calculée pour le transfert de chaleur qui est nécessaire.

3. Procédé suivant la revendication 1 ou 2, caractérisé en ce qu'il est prévu, en plus du changement de direction de tôle à tôle, une accélération et un ralentissement par une diminution de section transversale à l'emplacement de changement de direction.

4. Piège cryogénique pour séparer un constituant gazeux d'un mélange gazeux suivant la revendication 1, comprenant une succession de tôles de refroidissement ayant une bonne conductibilité thermique, disposées transversalement à la direction générale du courant gazeux, reliées au moins en partie à une paroi refroidie en formant, par une disposition en chicane, un canal de refroidissement généralement sinueux ayant des points de rebroussement et, le cas échéant, des points d'accélération, caractérisé par une régulation de la température (T) des tôles de refroidissement, par l'apport d'agent de refroidissement et par des moyens électriques supplémentaires de chauffage (H), à l'aide de sondes de température réparties dans la zone de séparation par la congélation, sur certaines tôles de refroidissement (6).

5. Pièce cryogénique suivant la revendication 4, caractérisée en ce que la succession de tôles de refroidissement comprend des tôles de refroidissement (6) refroidies activement, et des tôles de changement de direction (6') qui sont décalées par rapport à celles-ci et qui ne sont pas elles-mêmes refroidies.

6. Pièce cryogénique suivant la revendication 4 ou 5, caractérisée en ce que la paroi dans la région des raccordements des tôles de refroidissement est formée essentiellement par des tubes de refroidissement (7) ayant une bonne conductibilité calorifique, et comporte, en outre, des conducteurs chauffants (H) supplémentaires, en ce qu'il est prévu des pièces intermédiaires, qui sont constituées de tubes (7') de faible conductibilité thermique, pour l'agent de refroidissement, et qui séparent la zone de refroidissement en sections, et en ce que les conducteurs chauffants (H) des sections individuelles peuvent être réglés indépendamment les uns des autres.

7. Piège cryogénique suivant l'une des revendications 4 à 6, caractérisé par une structure concentrique à deux étages, comprenant un premier étage axial de prérefroidissement (2), destiné à refroidir le mélange gazeux jusqu'à environ la température de saturation du constituant à séparer par congélation, à l'intérieur d'un récipient axial, et une zone de séparation par congélation (3) coaxiale à ce récipient, à régulation de température échelonnée à l'aide de conducteurs chauffants (H) et de plateaux calorifuges (7') interposés.

8. Piège cryogénique suivant l'une des revendications 4 à 7, caractérisé par une propriété superficielle des tôles de refroidissement qui augmente les surfaces de refroidissement.

9. Piège cryogénique suivant la revendication 8, caractérisé en ce que les surfaces de refroidissement sont revêtues au moins en partie d'un absorbeur ou d'un adsorbeur sélectif du constituant à séparer.

10. Piège cryogénique suivant la revendication 9, caractérisé en ce que les tôles de refroidissement sont recouvertes en amont de la sortie du gaz.